Europäisches Patentamt

European Patent Office

Office européen des brevets

(11) Veröffentlichungsnummer: **0 542 036 A1**

# EUROPÄISCHE PATENTANMELDUNG

(21) Anmeldenummer: **92118398.4**

(22) Anmeldetag: **28.10.92**

(51) Int. Cl.5: **C08L 33/12**, C08L 51/00, //(C08L33/12,51:00)

(30) Priorität: **11.11.91 DE 4136993**

(43) Veröffentlichungstag der Anmeldung: **19.05.93 Patentblatt 93/20**

(84) Benannte Vertragsstaaten: **BE DE FR GB NL**

(71) Anmelder: **BASF Aktiengesellschaft Carl-Bosch-Strasse 38 W-6700 Ludwigshafen(DE)**

(72) Erfinder: **Lauke, Harald, Dr. Sophienstrasse 10 W-6800 Mannheim 1(DE)**
Erfinder: **Besecke, Siegmund, Dr. Niborgstrasse 11 W-3250 Hameln(DE)**
Erfinder: **Deckers, Andreas, Dr. Eschenbachstrasse 48 W-6700 Ludwigshafen(DE)**
Erfinder: **Wagner, Daniel, Dr. Im Roehrich 67 W-6702 Bad Duerkheim(DE)**

(54) **Transparente, schlagzähmodifizierte PMMA-Formmassen mit verbesserter Tieftemperatur-Schlagzähigkeit und hoher Bewitterungsstabilität.**

(57) Thermoplastische Formmassen, enthaltend ein Polymerisat

A) auf Basis von Polymethylmethacrylat erhältlich durch Polymerisation eines Monomerengemisches aus Methylmethacrylat, mindestens einer Verbindung ausgewählt aus der Gruppe bestehend aus Acrylsäure-$C_1$-$C_{20}$-alkylester und $C_5$-$C_8$-Cycloalkylacrylat, mindestens eines weiteren monofunktionellen Comonomeren und eines Übertragungsregler,

und

B) ein Pfropfcopolymerisat erhältlich durch

b₁) Emulsionspolymerisation eines Monomerengemisches aus Methylmethacrylat, mindestens eines pfropfvernetzenden Monomeren, mindestens eines monofunktionellen ethylenisch ungesättigten Comonomeren, mindestens eines zwei- oder mehrfach ethylenisch ungesättigten Comonomeren,

b₂) anschließende Emulsionspolymerisation in Gegenwart des nach Stufe b₁) erhaltenen Emulsionspolymerisates eines Monomerengemisches aus mindestens einem Acrylsäure-$C_1$-$C_{20}$-alkylester, mindestens eines Acrylsäure-phenyl-$C_1$-$C_4$-alkylesters, mindestens eines vinylaromatischen Monomeren, mindestens eines pfropfvernetzenden Monomeren, mindestens einer Verbindung ausgewählt aus der Gruppe bestehend aus Methylmethacrylat und einem monofunktionellen ethylenisch ungesättigten Monomeren, mindestens eines zwei- oder mehrfach ethylenisch ungesättigten Comonomeren und

b₃) anschließende Emulsionspolymerisation in Gegenwart des nach Stufe b₂) erhaltenen Emulsionspolymerisates eines Monomerengemisches aus Methylmethacrylat, eines monofunktionellen ethylenisch ungesättigten Comonomeren und eines Übertragungsreglers.

Die vorliegende Erfindung betrifft thermoplastische Formmassen, enthaltend

A) 10 bis 96 Gew. − % eines Polymerisats auf Basis von Polymethylmethacrylat erhältlich durch Polymerisation eines Monomerengemisches aus

$a_1$) 68 bis 99,49 Gew. − % Methylmethacrylat (I),

$a_2$) 0,5 bis 10 Gew. − % mindestens einer Verbindung ausgewählt aus der Gruppe bestehend aus Acrylsäure − $C_1$ − $C_{20}$ − alkylester (II) und $C_5$ − $C_8$ − Cycloalkylacrylat (III),

$a_3$) 0 bis 20 Gew. − % mindestens eines weiteren monofunktionellen Comonomeren (IV),

$a_4$) 0,01 bis 2 Gew. − % eines Übertragungsreglers,

und

B) 4 bis 90 Gew. − % eines Pfropfcopolymerisats erhältlich durch

$b_1$) Emulsionspolymerisation von 10 bis 30 Gew. − % eines Monomerengemisches aus

$b_{11}$) 80 bis 99,99 Gew. − % Methylmethacrylat (I),

$b_{12}$) 0,01 bis 5 Gew. − % mindestens eines pfropfvernetzenden Monomeren (V),

$b_{13}$) 0 bis 19,99 Gew. − % mindestens eines monofunktionellen thylenisch ungesättigten Comono − meren (VI),

$b_{14}$) 0 bis 3 Gew. − % mindestens eines zwei − oder mehrfach ethylenisch ungesättigten Como − nomeren (VII),

$b_2$) anschließende Emulsionspolymerisation in Gegenwart des nach Stufe $b_1$) erhaltenen Emulsions − polymerisates von 40 bis 75 Gew. − % eines Monomerengemisches aus

$b_{21}$) 60 bis 89,99 Gew. − % mindestens einer Verbindung ausgewählt aus der Gruppe bestehend aus Acrylsäure − $C_1$ − $C_{20}$ − alkylester (II) und $C_5$ − $C_8$ − Cycloalkylacrylat (III),

$b_{22}$) 10 bis 39,99 Gew. − % mindestens eines Acrylsäure − phenyl − $C_1$ − $C_4$ − alkylesters (VIII), wobei die Phenylgruppe ein bis dreifach mit $C_1$ − $C_4$ − Alkyl oder $C_5$ − $C_8$ − Cycloalkyl substituiert sei kann,

$b_{23}$) 0 bis 15 Gew. − % mindestens eines vinylaromatischen Monomeren (IX),

$b_{24}$) 0,01 bis 5 Gew. − % mindestens eines pfropfvernetzenden Monomeren (V),

$b_{25}$) 0 bis 10 Gew. − % mindestens einer Verbindung ausgewählt aus der Gruppe bestehend aus Methylmethacrylat (I) und einem monofunktionellen ethylenisch ungesättigten Monomeren (VI),

$b_{26}$) 0 bis 3 Gew. − % mindestens eines zwei − oder mehrfach ehylenisch ungesättigten Comono − meren (VII)

und

$b_3$) anschließende Emulsionspolymerisation in Gegenwart des nach Stufe $b_2$) erhaltenen Emulsionspo − lymerisates von 10 bis 35 Gew. − % eines Monomerengemisches aus

$b_{31}$) 80 bis 99,99 Gew. − % Methylmethacrylat (I),

$b_{32}$) 0 bis 19,95 Gew. − % eines monofunktionellen ethylenisch ungesättigten Comonomeren (VI),

$b_{33}$) 0,01 bis 2 Gew. − % eines Übertragungsreglers,

wobei sich die Gewichtsprozente der in den jeweiligen Stufen eingesetzten Monomerengemische auf 100 Gew. − % addieren.

Außerdem betrifft die Erfindung ein Verfahren zur Herstellung dieser thermoplastischen Formmassen, ihre Verwendung zur Herstellung von Formkörpern sowie Formkörper aus diesen thermoplastischen Formmassen.

Thermoplastische Formmassen auf Basis von Polymethylmethacrylat ("PMMA") weisen bekanntlich eine hohe Transparenz bei sehr guter Witterungsbeständigkeit auf. Aufgrund ihrer Sprödigkeit sind sie aber bei der Herstellung, Verarbeitung, Transport und Verwendung der Bruchgefahr ausgesetzt. Es ist weiterhin bekannt, daß man die Schlagzähigkeit von PMMA durch Zugabe elastomerer Materialien verbessern kann. Besonders vorteilhaft erwiesen sich bislang mehrstufig aufgebaute Emulsionspfropfcopolymerisate als Schlagzähmodifier, da sich bei diesen die Teilchengröße sehr gut steuern läßt und eine homogene Verteilung des Modifiers erreicht werden kann. Es ist allerdings erforderlich, die Brechungsindices der einzelnen Stufen an den Brechungsindex des PMMA anzugleichen, um Lichtstreuung und Trübung zu vermeiden.

Ein bislang noch nicht zufriedenstellend gelöstes Problem betrifft die mangelnde Schlagzähigkeit von thermoplastischen Formmassen auf Basis von PMMA bei tiefen Temperaturen, beispielsweise bei ( − 20 ˚ C) und darunter. Für eine Reihe von Anwendungen, z.B. im Automobilbereich, sind jedoch zusätzlich höhere Schlagzähigkeiten bei tiefen Temperaturen erwünscht.

In der DE − A 36 17 267 werden Pfropfpolymerisate mit einem Kern aus einem Silikonkautschuk, einer ersten Hülle aus einem Acrylatkautschuk und einer zweiten Hülle aus einem (Co)Polymerisat erhältlich aus bevorzugt Styrol, $\alpha$ − Methylstyrol, Acrylnitril und Methylmethacrylat beschrieben. Diese Pfropfpolymerisate sind u.a. mit PMMA mischbar und führen zu einer Verbesserung der Kerbschlagzähigkeit bei tiefen Temperaturen. Jedoch sind sowohl die Tieftemperatur−Schlagzähigkeit als auch die bei PMMA−Formmassen geforderte Transparenz nicht zufriedenstellend.

Aufgabe der vorliegenden Erfindung war es daher, transparente, witterungsbeständige PMMA−Formmassen mit verbesserter Tieftemperatur−Schlagzähigkeit zur Verfügung zu stellen, ohne gleichzeitig die sonstigen Eigenschaften wesentlich zu beeinträchtigen.

Demgemäß wurden die eingangs definierten thermoplastischen Formmassen gefunden.

Die als Komponente A) enthaltenen Polymerisate auf Basis von PMMA sind erhältlich durch Polymerisation eines Monomerengemischs in an sich bekannter Weise aus

68 bis 99,49 Gew.−%, vorzugsweise 78,5 bis 99,49 Gew.−% Methylmethacrylat (I),

0,5 bis 10 Gew.−%, vorzugsweise 0,5 bis 5 Gew.−% mindestens einer Verbindung ausgewählt aus der Gruppe bestehend aus Acrylsäure−$C_1$−$C_{20}$−alkylester (II) und $C_5$−$C_8$−Cycloalkylacrylat (III),

0 bis 20 Gew.−%, vorzugsweise 0 bis 15 Gew.−% mindestens eines weiteren monofunktionellen ethylenisch ungesättigten Comonomeren (IV) und

0,01 bis 2 Gew.−%, vorzugsweise 0,01 bis 1,5 Gew.−% eines Übertragungsreglers.

Unter den Acrylsäure−$C_1$−$C_{20}$−alkylestern (II) sind die $C_2$−$C_{10}$−Alkylester bevorzugt, wobei Butyl−acrylat und 2−Ethylhexylacrylat besonders bevorzugt sind. Anstelle dieser Acrylate kann man auch $C_5$−$C_8$−Cycloalkylacrylate (III) wie Cyclopentylacrylat, Cyclohexylacrylat, Cycloheptylacrylat, Cyclooctylacrylat, bevorzugt Cyclohexylacrylat sowie Mischungen davon oder Mischungen mit einem oder mehreren der gerade genannten Acrylate einsetzen.

Als weitere monofunktionelle ethylenisch ungesättigte Comonomere (IV) eignen sich Vinylaromaten wie Styrol, $\alpha$−Methylstyrol und Vinyltoluol, Vinylhalogenide wie Vinylchlorid und Vinyliden−chlorid, Maleinsäure und deren $C_1$−$C_{20}$−Alkylester, Acryl− und Methacrylnitril, Acryl− und Methacrylamid sowie deren N−Alkyl− und N,N−Dialkylderivate mit $C_1$−$C_{20}$−Alkylgruppen, Itakonsäure und deren $C_1$−$C_{20}$−Alkyle−ster, Vinylester von aliphatischen $C_2$−$C_8$−Carbonsäuren wie Vinylacetat sowie Mischungen dieser Monomeren.

Als Übertragungsregler eignen sich vorzugsweise $C_1$−$C_{15}$−Alkylmercaptane wie sek.−Butylmercaptan, n−Dodecylmercaptan, i−Dodecylmercaptan und tert.−Dodecylmercaptan.

Die Menge der Komponente A), bezogen auf das Gesamtgewicht der thermoplastischen Formmassen, beträgt 10 bis 96 Gew.−%, bevorzugt 20 bis 93 Gew.−%.

Die Herstellung der Komponente A) führt man im allgemeinen nach bekannten Polymerisationsverfahren wie Lösungs−, Suspensions−, Emulsions− oder Massepolymerisation durch. Solche Verfahren sind beispielsweise in H.Rauch−Puntigam, Th. Völker, Acryl− und Methacrylverbindungen, Springer−Verlag, Berlin, 1967, S. 149ff beschrieben.

Die Pfropfcopolymerisate der Komponente B) erhält man durch nacheinander ausgeführte Emulsions−polymerisationen der Monomerengemische $b_1$) bis $b_3$).

Der Kern $b_1$) des Emulsionspfropfcopolymerisats ist erhältlich durch Emulsionspolymerisation eines Monomerengemisches aus

80 bis 99,99 Gew.−%, bevorzugt 90 bis 98,90 Gew.−% Methylmethacrylat (I),

0,01 bis 5 Gew.−%, bevorzugt 0,1 bis 5 Gew.−% mindestens eines pfropfvernetzenden Monomeren (V),

0 bis 19,99 Gew.−%, bevorzugt 1 bis 9,99 Gew.−% mindestens eines monofunktionellen ethylenisch ungesättigten Comonomeren (VI),

0 bis 3 Gew.−% mindestens eines zwei− oder mehrfach ethylenisch ungesättigten Comonomeren (VII).

Als pfropfvernetzende Monomere (V) eignen sich Dicyclopentadienyl und Allyl−, Methallyl− und Crotylester einer $\alpha,\beta$−ungesättigten−Carbonsäure oder Dicarbonsäure, bevorzugt Allylmethacrylat.

Pfropfaktive Comonomere sorgen für eine äußere Vernetzung und bewirken beim Aufbau eines Emulsionspfropfcopolymerisates beispielsweise die Verknüpfung der Kernphase mit der nachfolgenden Polymerisationsstufe. Pfropfvernetzer wie Allylmethacrylat zeigen dieses Verhalten, weil eine polymerisierbare Doppelbindung (Doppelbindung des Säureteils) mit vergleichbarer Geschwindigkeit wie das Hauptmonomere (Methylmethacrylat) polymerisiert. Dagegen reagiert die Doppelbindung der Allylgruppe mit einer deutlich niedrigeren Polymerisationsgeschwindigkeit, so daß am Ende der Polymerisation einige dieser Doppelbindungen unverändert in der Kernphase erhalten bleiben, wodurch eine Pfropfvernetzung zwischen zwei Phasen möglich ist.

Weniger als 0,01 und mehr als 5 Gew.−% an pfropfvernetzenden Monomeren (V) führen nach den bisherigen Beobachtungen zu unzureichenden Schlagzähigkeitswerten.

Als monofunktionelle ethylenisch ungesättigte Comonomere (VI) seien genannt

Acrylsäure−$C_1$−$C_{20}$−alkylester und −$C_5$−$C_{12}$−cycloalkylester, Methacrylsäure−$C_2$−$C_{20}$−alkylester und −$C_5$−$C_{12}$−cycloalkylester, Acryl− und Methacrylnitril,

Acryl− und Methacrylamid sowie deren

N−Alkyl− und N,N−Dialkylderivate mit $C_1$−$C_{20}$−Alkylgruppen, Vinylester von aliphatischen $C_2$−$C_8$−Carbonsäuren wie Vinylacetat, Vinylaromaten wie Styrol, $\alpha$−Methylstyrol und Vinyltoluol, Vinylhalogenide wie Vinylchlorid und Vinylidenchlorid,

Malein− und Itakonsäure,

Malein− und Itakonsäure−$C_1$−$C_{20}$−alkylester,

Malein− und Itakonsäureamid sowie deren N−Alkyl− und N,N−Dialkylderivate mit $C_1$−$C_{20}$−Alkylgruppen

sowie Mischungen dieser Monomeren.

Als zwei− oder mehrfach ethylenisch ungesättigte Comonomere (VII) seien beispielhaft aufgeführt

Alkylenglykoldi(meth)acrylate wie Ethylenglykoldi(meth)acrylat, 1,2−Propandioldi(meth)acrylat, 1,3−Propandioldi(meth)acrylat, 1,3−Butandioldi(meth)acrylat, 1,4−Butandioldi(meth)acrylat, Oligo− und Polyethylenglykoldi(meth)acrylat,

Acrylate und Methacrylate von Glycerin, Trimethylolpropan, Pentaerythrit, Inosit und ähnliche Zuckeralkohole,

Acryl− und Methacrylamide von Ethylendiamin und andere aliphatische Di− und Polyamine,

Triallylcyanurat und Triallylisocyanurat sowie

Vinylbenzole wie Divinylbenzol und Trivinylbenzol.

Die Verwendung der zwei− oder mehrfach ethylenisch ungesättigten Comonomeren (VII) ist nicht zwingend notwendig, jedoch bevorzugt.

Die Comonomeren (VII) dienen als Vernetzungsmittel. Sie werden aufgrund ihrer Eigenschaft, sich gleichmäßig in die polymere Phase einzubauen, auch als "Polymerisationsvernetzer" bezeichnet. Während der Polymerisationsreaktion ist die Geschwindigkeit ihres Verbrauchs im wesentlichen vergleichbar mit derjenigen des Hauptmonomeren, wodurch eine Vernetzung innerhalb der Phase zustande kommt.

Das Kernmaterial hat im allgemeinen eine Glasübergangstemperatur von mehr als 50°C, die bevorzugt im Bereich von 60 bis 130°C liegt.

Die Menge der Komponente $b_1$), bezogen auf das Gesamtgewicht des Pfropfcopolymerisats B), beträgt 10 bis 30 Gew.−%, bevorzugt 15 bis 30 Gew.−%.

In der zweiten Polymerisationsstufe wird in Gegenwart des Emulsionspolymerisats aus Stufe $b_1$), auch "Kernlatex" oder "Saatlatex" genannt, ein Monomerengemisches aus

60 bis 89,99 Gew.−%, bevorzugt 70 bis 85 Gew.−% mindestens einer Verbindung ausgewählt aus der Gruppe bestehend aus Acrylsäure−$C_1$−$C_{20}$−alkylester (II) und $C_5$−$C_8$−Cycloalkylacrylat (III),

10 bis 39,99 Gew.−%, bevorzugt 10 bis 29,99 Gew.−% mindestens eines Acrylsäure−phenyl−$C_1$−$C_4$−alkylesters (VIII), wobei die Phenylgruppe ein bis dreifach mit $C_1$−$C_4$−Alkyl oder $C_5$−$C_8$−Cycloalkyl substituiert sein kann

0 bis 15 Gew.−%, bevorzugt 0 bis 13 Gew.−% mindestens einer Verbindung eines vinylaromatischen Monomeren (IX)

0,01 bis 5 Gew.−%, bevorzugt 0,1 bis 5 Gew.−% mindestens eines pfropfvernetzenden Monomeren (V),

0 bis 10 Gew.−%, bevorzugt 0 bis 5 Gew.−% mindestens einer Verbindung ausgewählt aus der Gruppe bestehend aus Methylmethacrylat (I) und einem monofunktionellen ethylenisch ungesättigten Comonomeren (VI),

0 bis 3 Gew.−%, bevorzugt von 0,05 bis 3 Gew.−% mindestens eines zwei− oder mehrfach ethylenisch ungesättigten Comonomeren (VII)

polymerisiert.

Unter den Acrylsäure−$C_1$−$C_{20}$−alkylestern (II) sind die $C_1$−$C_{10}$−Alkylester wie Methyl−, Ethyl−, Propyl−, n−Butyl−, n−Hexyl−, 2−Ethylhexyl− und n−Octylacrylat bevorzugt, wobei n−Butylacrylat und 2−Ethylhexylacrylat sowie deren Mischungen besonders bevorzugt sind. Anstelle dieser Acrylate kann man auch $C_5$−$C_8$−Cycloalkylacrylate (III) wie Cyclopentylacrylat, Cyclohexylacrylat, Cycloheptylacrylat, Cyclooctylacrylat, bevorzugt Cyclohexylacrylat, oder Mischungen davon oder Mischungen mit einem oder mehreren der gerade genannten Acrylate einsetzen.

Als Acrylsäure−phenyl−$C_1$−$C_4$−alkylester (VIII), wobei die Phenylgruppe ein bis dreifach mit $C_1$−$C_4$−Alkyl oder $C_5$−$C_8$−Cycloalkyl substituiert sein kann, seien genannt Benzylacrylat, p−Tolylacrylat, 2−,

4 – Methoxyphenylacrylat, Phenethylacrylat, Phenylpropylacrylat und Phenylbutylacrylat, bevorzugt Phe – nethylacrylat und Phenylpropylacrylat.

Die Comonomeren (VIII) setzt man im wesentlichen zur Angleichung des Brechungsindex an die Brechungsindices der ersten und dritten Phase des Pfropfcopolymerisates sowie der thermoplastischen Matrix ein. Sie bewirken in der Regel eine geringere Erhöhung der Glasübergangstemperatur der zweiten, elastomeren Phase als die vinylaromatischen Monomere (IX).

Als weitere Comonomere kann man vinylaromatische Monomere (IX) wie Styrol, $\alpha$ – Methylstyrol, tert. – Butylstyrol, Monochlorstyrol, Vinyltoluol und Acryl – und Methacrylsäurephenylester, bevorzugt Styrol, einsetzen.

Die vinylaromatischen Monomeren (IX), insbesondere Styrol, kann man zur Angleichung des Bre – chungsindex an die Brechungsindices der Kernphase und der nachfolgenden Polymerisatphasen mitver – wenden.

Setzt man die vinylaromatischen Monomeren (IX) ein, so wählt man die Summe der Mengen der Monomerkomponenten $b_{22}$ und $b_{23}$ bevorzugt im Bereich von 10 bis 39,99, besonders bevorzugt von 10 bis 29,99 Gew. – %, bezogen auf die Gesamtmenge der Monomeren von $b_2$). Bevorzugt wählt man dabei das Gewichtsverhältnis der Komponenten $b_{22}$) zu $b_{23}$) größer als 1. Dabei wählt man die Mengen zweckmäßig so, daß der Brechungsindex der elastomeren Hülle dem der harten, nicht – elastischen der thermoplastischen Masse (A) entspricht, um Trübung und Lichtstreuung zu vermeiden.

Bei der Angleichung der Brechungsindices ist generell anzumerken, daß die Mengen der Komponenten $b_{21}$ (Acrylsäurealkylester II und Cycloalkylacrylat III), $b_{22}$ (Acrylsäure – phenylalkylester VIII) und $b_{23}$ – (vinylaromatisches Monomer IX) das Mengenverhältnis der Komponenten $b_{24}$ (pfropfvernetzendes Monomer V) und $b_{26}$ (zwei – oder mehrfach ethylenisch ungesättigtes Comonomer VII) sowie die Gesamtmenge der Komponenten $b_{24}$ und $b_{26}$ beeinflussen.

So kann es beispielsweise notwendig sein, die Gesamtmenge der Komponenten $b_{24}$ (Monomer V) und $b_{26}$ (Comonomer VII) für den Fall höher zu wählen, falls als Brechungsindexangleicher nur die Komponente $b_{22}$ (Monomer VIII) verwendet wird, verglichen mit dem Fall, daß zusätzlich die Komponente $b_{23}$ (Monomer IX) mit zugesetzt wird.

Ebenso ist bei der Angleichung der Brechungsindices der verschiedenen Stufen zu beachten, ob man als Komponente $b_{21}$ eine Mischung, z.B. von n – Butylacrylat und 2 – Ethylhexylacrylat, einsetzt, oder nur ein Monomer, z.B. n – Butylacrylat. Im ersten Fall kann es unter Umständen erforderlich sein, die Gesamt – menge der Komponenten $b_{24}$ (Monomer V) und $b_{26}$ (Comonomer VII) zu erhöhen.

Als pfropfvernetzende Monomere (V) setzt man bevorzugt Allylmethacrylat ein. Setzt man weniger als 0,01 Gew. – % der Monomeren (V) ein, werden nur unzureichende Schlagzähigkeiten erreicht. Werden mehr als 5 Gew. – % eingesetzt, so sinkt die Schlagzähigkeit ebenfalls.

Des weiteren kann man Methylmethacrylat und/oder ein monofunktionelles ethylenisch ungesättigtes Monomeres verwenden, bevorzugt setzt man nur Methylmethacrylat ein.

Ferner kann man mindestens ein zwei – oder mehrfach ethylenisch ungesättigtes Monomer (VII), bevorzugt 1,4 – Butandioldimethacrylat einsetzen. Die Verwendung ist nicht zwingend notwendig, jedoch bevorzugt.

Zweckmäßig wählt man die Summe der Mengen der Monomerkomponenten $b_{24}$ und $b_{26}$ im Bereich von 0,01 bis 5 Gew. – %.

Die zweite, elastomere Phase $b_2$) weist im allgemeinen eine Glasübergangstemperatur im Bereich von kleiner oder gleich ( – 20)°C auf, bevorzugt im Bereich von ( – 20) bis ( – 60)°C.

Die Menge der Komponente $b_2$), bezogen auf das Gesamtgewicht des Pfropfcopolymerisats B), beträgt 40 bis 75 Gew. – %, bevorzugt 40 bis 70 Gew. – %.

Entscheidend im Sinne der Erfindung und wesentlich für den Erhalt einer hohen Schlagzähigkeit auch bei tiefen Temperaturen ist die Zusammensetzung der zweiten Polymerisationsstufe ($b_2$). Besonders bedeutsam ist hierbei die Verwendung eines Acrylsäure – phenyl – $C_1$ – $C_4$ – alkylesters VIII (Komponente $b_{22}$) als Brechungsindexangleicher in Kombination mit mindestens einem Acrylsäure – $C_1$ – $C_{20}$ – alkylester (Komponente $b_{21}$) sowie mindestens einem pfropfvernetzenden Monomer V (Komponente $b_{24}$).

In der dritten Polymerisationsstufe wird in Gegenwart des Emulsionspolymerisats aus Stufe $b_2$) ein Monomerengemisch aus

80 bis 99,99 Gew. – %,        bevorzugt 83 bis 99,99 Gew. – % Methylmethacrylat (I),

0 bis 19,95 Gew. – %,        bevorzugt 0 bis 15 Gew. – % mindestens eines monofunktionellen ethylenisch ungesättigten Comonomeren (VI) und

0,01 bis 2 Gew. – %        eines Übertragungsreglers

zu einer harten Schale polymerisiert.

Als monofunktionelles ethylenisch ungesättigtes Comonomeres (VI) setzt man bevorzugt Methylacrylat, Ethylacrylat oder Butylacrylat ein.

Als Übertragungsregler eignen sich bevorzugt $C_1 - C_{15}$ - Alkylmercaptane, besonders bevorzugt n - Dodecylmercaptan und i - Dodecylmercaptan.

Die Mitverwendung eines Übertragungsreglers ist von besonderer Bedeutung, da er die Kettenlänge bei der Polymerisation der Endphase begrenzt. Auf diese Weise kann das Molekulargewicht der äußeren, harten Phase demjenigen der thermoplastischen Masse angepaßt werden.

Die Glasübergangstemperatur der äußeren Schale $b_3$) ist im allgemeinen größer als 50°C, bevorzugt sind 60 bis 130°C.

Die Menge der Komponente $b_3$), bezogen auf das Gesamtgewicht des Pfropfcopolymerisats B), beträgt 10 bis 35 Gew. - %, bevorzugt 15 bis 35 Gew. - %.

Den mittleren Teilchendurchmesser des Pfropfcopolymerisates B) wählt man in der Regel im Bereich von 50 bis 1000 nm, bevorzugt von 100 bis 500 nm, besonders bevorzugt von 150 bis 400 nm.

Die Menge der Komponente B, bezogen auf das Gesamtgewicht der thermoplastischen Formmassen, beträgt 4 bis 90 Gew. - %, bevorzugt 7 bis 80 Gew. - %.

Die erfindungsgemäßen Emulsionspfropfcopolymerisate lassen sich in an sich bekannter Weise nach der Methodik der Emulsionspfropfpolymerisation, die auch als Saatlatex - Verfahren bezeichnet wird, in drei aufeinanderfolgenden Stufen herstellen, wobei die Latexteilchen bis zum Abschluß der Endstufe im emul - gierten Zustand verbleiben.

Durch das polymere Produkt im Saatlatex wird der Gesamtgehalt an Teilchen im dreistufigen Endpro - dukt festgelegt. Das bedeutet, daß nach der ersten Polymerisationsstufe weitere Teilchen im wesentlichen nicht neu gebildet werden und der Teilchengehalt annähernd konstant bleibt.

Durch Verwendung von Emulgatoren läßt sich die Teilchengröße sowohl des Kernlatex als auch der Latexteilchen in den Zwischenstufen festlegen, wobei Emulgatorart und - konzentration bestimmend sind.

Es können anionogene und nicht ionogene Emulgatoren verwendet werden.

Geeignete Emulgatoren sind beispielsweise

Dioctylnatriumsulfosuccinat, Natriumlaurylsulfat, Natriumdodecylbenzolsulfonat, Alkylphenoxypolyethylen - sulfonate und Salze von langkettigen Carbon - und Sulfonsäuren.

Als nichtionogene Emulgatoren sind beispielsweise

Fettalkoholpolyglykolether, Alkylarylpolyglykolether, Fettsäuremonoethanolamide sowie ethoxylierte Fett - säureamide und - amine

geeignet.

Bezogen auf das Gesamtgewicht des Emulsionspfropfcopolymerisates liegt die Gesamtemulgatormenge vorzugsweise bei 0,05 bis 5 Gew. - %.

Der Durchmesser der fertigen Emulsionspolymerisatteilchen wird in an sich bekannter Weise bei 50 bis 450 nm, bevorzugt bei 150 bis 400 nm eingestellt.

Als Polymerisationsinitiatoren können

Ammonium - und Alkaliperoxodisulfate wie Kaliumperoxodisulfat sowie

Initiatorkombinationssysteme wie Natriumpersulfat - Natriumhydrosulfit, Kaliumpersulfat - Natriumformal - dehydsulfoxylat und Kaliumperoxodisulfat - Natriumdithionit - Eisen - II - sulfat

verwendet werden, wobei die Polymerisationstemperatur im Fall der thermisch zu aktivierenden Ammonium - und Alkaliperoxodisulfate bei 50 bis 100°C und bei den Initiatorkombinationen, die als Redoxsysteme wirksam sind, darunter liegen kann, etwa im Bereich von 20 bis 50°C.

Die gesamte Initiatormenge liegt vorzugsweise zwischen 0,02 und 0,5 Gew. - %, bezogen auf das fertige Emulsionspolymerisat.

Neben dem Molmassenregler, der bei der Polymerisation der äußeren harten Schale verwendet wird, kann die Polymerisation des Kerns und der übrigen Schalen ebenfalls in Gegenwart eines Reglers durchgeführt werden. Die Gesamtreglermenge liegt zwischen 0,01 und 2 Gew. - %, bezogen auf das Gesamtgewicht des Polymerisates.

Im allgemeinen empfiehlt es sich, den pH - Wert konstant zu halten, weswegen die Mitverwendung eines Puffers zweckmäßig ist. Üblich sind Salze der Phosphorsäure, z.B. Mischungen von Kaliumdihydro - genphosphat und Dinatriumhydrogenphosphat; es können auch ammoniakalische Lösungen verwendet werden.

Die Polymerisation kann bei einer Temperatur im Bereich zwischen 70 und 100°C durchgeführt werden, wobei eine Temperatur von 85 bis 95°C bevorzugt ist. Bei Temperaturen unter 70°C verlängern sich die Polymerisationszeiten, bei Temperaturen über 100°C ist es erforderlich, die Polymerisation unter Druck durchzuführen.

Im übrigen wird das erfindungsgemäße Emulsionspfropfcopolymerisat so hergestellt, daß man eine wäßrige Mischung, bestehend aus Monomeren, Vernetzer, Emulgator, Initiator, Regler und einem Puffersy‐ stem in einem mit Stickstoff inertisieren Reaktor vorlegt, in der Kälte unter Rühren inertisiert und dann für etwa 15 bis 120 Minuten auf die Polymersationstemperatur bringt. Auf diese Weise wird zunächst durch Emulgierung und Polymerisation des Kernmonomerengemisches der Kernlatex gebildet. Die weiteren Stufen werden jeweils unter Zulauf der Monomeren in Gegenwart der bereits gebildeten Stufe durch Emulsionspolymerisation erzeugt, wobei es zweckmäßig ist, die Monomeren zuvor unter Rühren im wäßrigen Medium zu emulgieren.

Grundsätzlich erfolgt der Zulauf einer weiteren Stufe erst dann, wenn die Polymerisation der vorherge‐ henden Stufe abgeschlossen ist, wodurch eine Durchmischung der einzelnen Sturen unterdrückt und ein reiner dreistufiger Aufbau der Emulsionspfropfcopolymerisate gewährleistet wird. Dadurch kann eine Nach‐ reaktionszeit von 15 bis 120 Minuten nach Zulaufende der jeweiligen Stufe und vor Beginn des Zulaufs der nächsten Stufe erforderlich sein.

Die Isolierung des Emulsionspolymerisates aus dem erhaltenen Latex erfolgt auf bekannte Weise durch Ausfällung, Filtration und anschließender Trocknung. Für die Ausfällung können beispielsweise wäßrige Lösungen von anorganischen Salzen wie Natriumchlorid, Natriumsulfat, Magnesiumsulfat und Calciumchlo‐ rid, wäßrige Lösungen von Salzen der Ameisensäure wie Magnesiumformiat, Calciumformiat und Zinkfor‐ miat, wäßrige Lösungen von anorganischen Säuren wie Schwefel‐ und Phosphorsäure sowie wäßrige ammoniakalische und aminische Lösungen sowie andere wäßrige alkalische Lösungen, z.B. von Natrium‐ und Kaliumhydroxid verwendet werden.

Die Trocknung kann beispielsweise durch Gefrier‐, Sprüh‐, Wirbelschicht‐ und Umlufttrocknung erfolgen.

Das getrocknete Polymerisat kann dann in Extrudern mit Komponente A) zu bei tiefen Temperaturen schlagzähen thermoplastischen Massen verarbeitet werden.

Ferner können Koagulation und Entwässerung des Latex direkt im Extruder erfolgen. Zur Herstellung der thermoplastischen Massen kann man den Latex auch unmittelbar im Extruder mit Komponente A) vermischen.

Nicht nur durch Extrusion, sondern auch durch andere Verarbeitungsverfahren wie Kalandrieren und Spritzgießen können die Emulsionspfropfcopolymerisate B) unter Abmischung mit der PMMA‐Komponente A) zu Formkörpern, Folien und Platten verarbeitet werden.

Den thermoplastischen Formmassen kann man neben den erfindungsgemäß verwendeten Polymerisa‐ ten A) und B) noch übliche Zusatzstoffe und Verarbeitungshilfsmittel wie Stabilisatoren, Antioxidatien, Entformungshilfsmittel, Lichtschutzmittel, Flammschutzmittel und Antistatika zusetzen.

Die erfindungsgemäßen thermoplastischen Formmassen weisen gegenüber dem Stand der Technik bei hoher Transparenz und Witterungsstabilität eine verbesserte Schlagzähigkeit bei tiefen Temperaturen auf.

Beispiele

Folgende Abkürzungen werden in den Beispielen verwendet:

| MMA | Methylmethacrylat |
|---|---|
| ALMA | Allylmethacrylat |
| MA | Methylacrylat |
| BA | Butylacrylat |
| S | Styrol |
| EHA | 2‐Ethylhexylacrylat |
| PEA | Phenylethylacrylat |
| BDMA2 | 1,4‐Butandioldimethacrylat |

Beispiel 1 (Vergleich)

In einem Reaktionsgefäß von 10 l Inhalt wurden 30 Gew.‐% einer Mischung bestehend aus

565 g    MMA,
3 g    ALMA,
5 g    MA,
565 g    vollentsalztem Wasser sowie
6,62g    einer 60 gew.‐%igen wäßrigen Dioctylnatriumsulfosuccinat‐Lösung

mit 284 g vollentsalztem Wasser und 1,14 g Natriumperoxodisulfat versetzt. Diese Vorlage wurde unter Rühren mit Stickstoff inertisiert und dann 30 min auf 80°C erhitzt. Anschließend wurden die restlichen 70 Gew. – % der Mischung während 30 min zudosiert. Nach Beendigung des Zulaufs wurde das Reaktionsge – misch weitere 30 min bei 80˚C gerührt, und danach mit 448 g vollentsalztem Wasser verdünnt. Anschlie – ßend wurde zu diesem Reaktionsgemisch eine zweite Mischung bestehend aus

1130 g      BA,
267 g      Styrol,
14 g      ALMA,
14 g      einer 60 gew. – %igen wäßrigen Dioctylnatriumsulfosuccinat – Lösung,
1420 g      vollentsalztem Wasser sowie
1,42g      Natriumperoxodisulfat

während 170 min zudosiert. Nach weiteren 90 min bei der oben angegebenen Temperatur wurde eine dritte Mischung bestehend aus

819 g      MMA,
34 g      MA sowie
1,7 g      n – Dodecylmercaptan

während 50 min zudosiert. Anschließend wurde das Reaktionsgemisch weitere 60 min weitergerührt.

Danach wurden 2 l der so erhaltenen Polymerdispersion bei 78˚C während 6 min unter Rühren zu 4 l einer 0,3 gew. – %igen wäßrigen Calciumformiatlösung gegeben. Dann wurde auf 90˚C erhitzt und 90 min gerührt. Der dabei erhaltene koagulierte Latex wurde bei 65˚C abfiltriert, mit 3 l vollentsalztem Wasser gewaschen und bei 80˚C getrocknet.

Beispiele 2 bis 11

Bei den folgenden Beispielen wurde wie im Beispiel 1 verfahren, mit dem Unterschied, daß die Monomerenzusammensetzungen der jeweils zweiten Mischung wie in der folgenden Tabelle 1 angegeben variiert wurde. Die Angaben in eckigen Klammern geben die Gewichtsprozente bezogen auf die Gesamt – menge der Monomeren der zweiten Stufe an.

Tabelle 1: Monomerenzusammensetzung der zweiten Stufe

| | BA | EHA | PEA | S | ALMA | BDMA2 |
|---|---|---|---|---|---|---|
| Beispiel 1 (Vergleich) | 1130 g [80,1] | – | – | 267 g [18,9] | 14 g [1] | – |
| Beispiel 2 (Vergleich) | 1130 g [79,7] | – | – | 267 g [18,8] | 14 g [1] | 7 g [0,5] |
| Beispiel 3 | 1030 g [73] | – | 367 g [26] | – | 14 g [1] | – |
| Beispiel 4 | 1030 g [72,85] | – | 367 g [25,9] | – | 14 g [1] | 3 g [0,25] |
| Beispiel 5 | 1030 g [72,6] | – | 367 g [25,9] | – | 14 g [1] | 7 g [0,5] |
| Beispiel 6 | 1030 g [72,3] | – | 367 g [25,8] | – | 21 g [1,4] | 7 g [0,5] |
| Beispiel 7 | 1076 g [76,3] | – | 184 g [13] | 134 g [9,5] | 14 g [1] | 3 g [0,2] |
| Beispiel 8 | 1076 g [76] | – | 184 g [13] | 134 g [9,5] | 14 g [1] | 7 g [0,5] |
| Beispiel 9 | 538 g [38,2] | 538 g [38,2] | 184 g [13,1] | 134 g [9,5] | 14 g [1] | – |
| Beispiel 10 | 538 g [38] | 538 g [38] | 184 g [13] | 134 g [9,5] | 14 g [1] | 7 g [0,5] |
| Beispiel 11 | 538 g [37,65] | 538 g [37,65] | 184 g [12,9] | 134 g [9,4] | 14 g [1] | 21 g [1,4] |

Für die anschließende Qualitätsprüfung wurden Probekörper aus Granulaten gefertigt, die aus 45 Gew. – % des Emulsionspfropfcopolymerisates und 55 Gew. – % eines PMMA – Harzes mit einem mittleren Molekulargewicht von 100.000 aus 99,0 Gew. – % Methylmethacrylat und 1,0 Gew. – % Methylacrylat hergestellt worden waren.

Zur Qualitätsprüfung der Abmischungen wurden die folgenden Eigenschaften bestimmt:

– Schlagzähigkeit (Charpy) nach DIN 53 453 (bei 23˚ C und bei( – 20)˚ C)

– Lichtdurchlässigkeit nach DIN 5036 (6 mm)

Als Lichtdurchlässigkeit oder Transmission bezeichnet man das Verhältnis des von einer Probe durchge – lassenen Lichtes zur Intensität des einfallenden Lichtes. Sie wurde in Abhängigkeit von der Wellenlänge in einem Bereich von 400 bis 900 nm an einem Probenkörper mit einer Dicke von 6 mm bestimmt.

Die Ergebnisse der einzelnen Qualitätsprüfungen sind der Tabelle 2 zu entnehmen. Sie zeigen, daß die erfindungsgemäßen thermoplastischen Formmassen hinsichtlich der Tieftemperatur – Schlagzähigkeit den aus dem Stand der Technik bekannten PMMA – Formmassen überlegen sind.

Tabelle 2: Prüfergebnisse von Probekörpern aus Abmischungen aus 45 Gew.-% des Emulsionspfropfcopolymerisates und 55 Gew.-% eines PMMA-Harzes aus 99,0 Gew.-% Methylmethacrylat und 1,0 Gew.-% Methylacrylat

| Beispiel | Schlagzähigkeit [kJ/m$^2$] bei 23°C | bei (−20)°C | LD-Wert [%] |
|---|---|---|---|
| zum Vergleich | | | |
| 1 | 80 | 25 | 18 |
| 2 | 70 | 20 | 17,5 |
| erfindungsgemäß | | | |
| 3 | 75 | 40 | 18,5 |
| 4 | 80 | 43 | 18,5 |
| 5 | 85 | 49 | 17,0 |
| 6 | 85 | 52 | 17,0 |
| 7 | 85 | 42 | 19,0 |
| 8 | 90 | 42 | 19,0 |
| 9 | 85 | 45 | 19,5 |
| 10 | 80 | 35 | 18,0 |
| 11 | 80 | 34 | 21,0 |

**Patentansprüche**

1. Thermoplastische Formmassen, enthaltend
   A) 10 bis 96 Gew. – % eines Polymerisats auf Basis von Polymethylmethacrylat erhältlich durch Polymerisation eines Monomerengemisches aus
   $a_1$) 68 bis 99,49 Gew. – % Methylmethacrylat (I),
   $a_2$) 0,5 bis 10 Gew. – % mindestens einer Verbindung ausgewählt aus der Gruppe bestehend aus Acrylsäure – $C_1$ – $C_{20}$ – alkylester (II) und $C_5$ – $C_8$ – Cycloalkylacrylat (III),
   $a_3$) 0 bis 20 Gew. – % mindestens eines weiteren monofunktionellen Comonomeren (IV),
   $a_4$) 0,01 bis 2 Gew. – % eines Übertragungsreglers,
   und
   B) 4 bis 90 Gew. – % eines Pfropfcopolymerisats erhältlich durch
   $b_1$) Emulsionspolymerisation von 10 bis 30 Gew. – % eines Monomerengemisches aus
   $b_{11}$) 80 bis 99,99 Gew. – % Methylmethacrylat (I),
   $b_{12}$) 0,01 bis 5 Gew. – % mindestens eines pfropfvernetzenden Monomeren (V),
   $b_{13}$) 0 bis 19,99 Gew. – % mindestens eines monofunktionellen ethylenisch ungesättigten Comonomeren (VI),
   $b_{14}$) 0 bis 3 Gew. – % mindestens eines zwei – oder mehrfach ethylenisch ungesättigten Comonomeren (VII),
   $b_2$) anschließende Emulsionspolymerisation in Gegenwart des nach Stufe $b_1$) erhaltenen Emul – sionspolymerisates von 40 bis 75 Gew. – % eines Monomerengemisches aus
   $b_{21}$) 60 bis 89,99 Gew. – % mindestens einer Verbindung ausgewählt aus der Gruppe beste – hend aus Acrylsäure – $C_1$ – $C_{20}$ – alkylester (II) und $C_5$ – $C_8$ – Cycloalkylacrylat (III),

$b_{22}$) 10 bis 39,99 Gew.−% mindestens eines Acrylsäure−phenyl−$C_1$−$C_4$−alkylesters (VIII), wobei die Phenylgruppe ein bis dreifach mit $C_1$−$C_4$−Alkyl oder $C_5$−$C_8$−Cycloalkyl substituiert sein kann,

$b_{23}$) 0 bis 15 Gew.−% mindestens eines vinylaromatischen Monomeren (IX),

$b_{24}$) 0,01 bis 5 Gew.−% mindestens eines pfropfvernetzenden Monomeren (V),

$b_{25}$) 0 bis 10 Gew.−% mindestens einer Verbindung ausgewählt aus der Gruppe bestehend aus Methylmethacrylat (I) und einem monofunktionellen ethylenisch ungesättigten Monomeren (VI),

$b_{26}$) 0 bis 3 Gew.−% mindestens eines zwei− oder mehrfach ethylenisch ungesättigten Comonomeren (VII)

und

$b_3$) anschließende Emulsionspolymerisation in Gegenwart des nach Stufe $b_2$) erhaltenen Emul−sionspolymerisates von 10 bis 35 Gew.−% eines Monomerengemisches aus

$b_{31}$) 80 bis 99,99 Gew.−% Methylmethacrylat (I),

$b_{32}$) 0 bis 19,95 Gew.−% eines monofunktionellen ethylenisch ungesättigten Comonomeren (VI),

$b_{33}$) 0,01 bis 2 Gew.−% eines Übertragungsreglers,

wobei sich die Gewichtsprozente der in den jeweiligen Stufen eingesetzten Monomerengemische auf 100 Gew.−% addieren.

2. Verfahren zur Herstellung von thermoplastischen Formmassen gemäß Anspruch 1 in an sich bekannter Weise, dadurch gekennzeichnet, daß man

A) 10 bis 96 Gew.−% eines Polymerisats auf Basis von Polymethylmethacrylat erhältlich durch Polymerisation eines Monomerengemisches aus

$a_1$) 68 bis 99,49 Gew.−% Methylmethacrylat (I),

$a_2$) 0,5 bis 10 Gew.−% mindestens einer Verbindung ausgewählt aus der Gruppe bestehend aus Acrylsäure−$C_1$−$C_{20}$−alkylester (II) und $C_5$−$C_8$−Cycloalkylacrylat (III),

$a_3$) 0 bis 20 Gew.−% mindestens eines weiteren monofunktionellen Comonomeren (IV),

$a_4$) 0,01 bis 2 Gew.−% eines Übertragungsreglers,

mit

B) 4 bis 90 Gew.−% eines Pfropfcopolymerisats erhältlich durch

$b_1$) Emulsionspolymerisation von 10 bis 30 Gew.−% eines Monomerengemisches aus

$b_{11}$) 80 bis 99,99 Gew.−% Methylmethacrylat (I),

$b_{12}$) 0,01 bis 5 Gew.−% mindestens eines pfropfvernetzenden Monomeren (V),

$b_{13}$) 0 bis 19,99 Gew.−% mindestens eines monofunktionellen ethylenisch ungesättigten Comonomeren (VI),

$b_{14}$) 0 bis 3 Gew.−% mindestens eines zwei− oder mehrfach ethylenisch ungesättigten Comonomeren (VII),

$b_2$) anschließende Emulsionspolymerisation in Gegenwart des nach Stufe $b_1$) erhaltenen Emul−sionspolymerisates von 40 bis 75 Gew.−% eines Monomerengemisches aus

$b_{21}$) 60 bis 89,99 Gew.−% mindestens einer Verbindung ausgewählt aus der Gruppe beste−hend aus Acrylsäure−$C_1$−$C_{20}$−alkylester (II) und $C_5$−$C_8$−Cycloalkylacrylat (III),

$b_{22}$) 10 bis 39,99 Gew.−% mindestens eines Acrylsäure−phenyl−$C_1$−$C_4$−alkylesters (VIII), wobei die Phenylgruppe ein bis dreifach mit $C_1$−$C_4$−Alkyl oder $C_5$−$C_8$−Cycloalkyl substituiert sein kann,

$b_{23}$) 0 bis 15 Gew.−% mindestens eines vinylaromatischen Monomeren (IX),

$b_{24}$) 0,01 bis 5 Gew.−% mindestens eines pfropfvernetzenden Monomeren (V),

$b_{25}$) 0 bis 10 Gew.−% mindestens einer Verbindung ausgewählt aus der Gruppe bestehend aus Methylmethacrylat (I) und einem monofunktionellen ethylenisch ungesättigten Monomeren (VI),

$b_{26}$) 0 bis 3 Gew.−% mindestens eines zwei− oder mehrfach ethylenisch ungesättigten Comonomeren (VII)

und

$b_3$) anschließende Emulsionspolymerisation in Gegenwart des nach Stufe $b_2$) erhaltenen Emul−sionspolymerisates von 10 bis 35 Gew.−% eines Monomerengemisches aus

$b_{31}$) 80 bis 99,99 Gew.−% Methylmethacrylat (I),

$b_{32}$) 0 bis 19,95 Gew.−% eines monofunktionellen ethylenisch ungesättigten Comonomeren (VI),

b$_{33}$) 0,01 bis 2 Gew. – % eines Übertragungsreglers,
wobei sich die Gewichtsprozente der in den jeweiligen Stufen eingesetzten Monomerengemische auf 100 Gew. – % addieren, mischt.

3.  Verwendung der thermoplastischen Formmassen gemäß Anspruch 1 zur Herstellung von Formkörpern.

4.  Formkörper, erhältlich aus den thermoplastischen Formmassen gemäß Anspruch 1.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | EP-A-0 113 924 (RÖHM GMBH) <br> * das ganze dokument * <br><br> ----- | 1-4 | C08L33/12 <br> C08L51/00 <br> //(C08L33/12, <br> 51:00) |
|  |  |  | **RECHERCHIERTE SACHGEBIETE (Int. Cl.5 )** |
|  |  |  | C08L <br> C08F |

Der vorliegende Recherchenbericht wurde für alle Patentansprüche erstellt

| Recherchenort | Abschlußdatum der Recherche | Prüfer |
|---|---|---|
| DEN HAAG | 05 FEBRUAR 1993 | SIEMENS T. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
........................................................................
& : Mitglied der gleichen Patentfamilie, übereinstimmendes
    Dokument

EPO FORM 1503 03.82 (P0403)